**Europäisches Patentamt**

(19) **European Patent Office**

**Office européen des brevets**

(11) Numéro de publication : **0 266 384 B1**

(12) **FASCICULE DE BREVET EUROPEEN**

(45) Date de publication du fascicule du brevet :
**18.09.91 Bulletin 91/38**

(51) Int. Cl.$^5$ : **C09K 11/00**

(21) Numéro de dépôt : **87902561.7**

(22) Date de dépôt : **29.04.87**

(86) Numéro de dépôt international :
**PCT/FR87/00144**

(87) Numéro de publication internationale :
**WO 87/06601 05.11.87 Gazette 87/24**

(54) **BORATES MIXTES DE TERRES RARES LUMINESCENTS.**

(30) Priorité : **29.04.86 FR 8606181**

(43) Date de publication de la demande :
**11.05.88 Bulletin 88/19**

(45) Mention de la délivrance du brevet :
**18.09.91 Bulletin 91/38**

(84) Etats contractants désignés :
**DE FR GB NL**

(56) Documents cités :
**CH-A-47 533 6
DE-A- 2 410 134
FR-A-20 082 04
FR-A-23 330 36
US-A-42 027 94
CHEMICAL ABSTRACTS, vol. 91, no. 18, 29
October 1979, Columbus, Ohio, US, see page
640, abstract 150155x, & JP-A-5462989**

(73) Titulaire : **CENTRE NATIONAL DE LA
RECHERCHE SCIENTIFIQUE (CNRS)
15, Quai Anatole France
F-75007 Paris (FR)**

(72) Inventeur : **FOUASSIER, Claude, Emile, Pierre
12, rue de la Chênaie
F-33170 Gradignan (FR)**
Inventeur : **FU, Wen, Tian
Domaine Universitaire Ch. 234 - Bat. F
Village 1 F-33405 Talence Cédex (FR)**
Inventeur : **HAGENMULLER, Paul
351, cours de la Libération
F-33405 Talence Cédex (FR)**

(74) Mandataire : **Tonnellier, Jean-Claude et al
Cabinet Nony & Cie. 29, rue Cambacérès
F-75008 Paris (FR)**

## Description

La présente a pour objet de nouveaux borates mixtes de terres rares, leur préparation et leur application, notamment comme luminophores pour l'éclairage fluorescent.

On sait que des luminophores à base de terres rares sont utilisés dans les tubes fluorescents pour l'éclairage. Ces tubes fluorescents utilisent le rayonnement émis par la vapeur de mercure sous basse pression, qui est particulièrement intense dans le court ultraviolet pour les longueurs d'onde voisines de 254nm. Les luminophores ont pour fonction de convertir ce rayonnement en lumière visible. On utilise généralement des mélanges de luminophores émettant dans les longueurs d'onde correspondant au vert, au rouge, ou au bleu. Les conditions qui doivent être remplies par les luminophores pour donner une lumière satisfaisante sont connues ; R.M. Leskela, Rare earths Spectroscopy, World Scientific, pp.617-628, 1985.

Les luminophores à base de terres rares possèdent des rendements de luminescence supérieurs à ceux des éléments de transition tels que les chlorophosphates alcalino-terreux dopés au manganèse. Cependant, leur prix de revient limite leur utilisation. Les recherches portent principalement sur l'obtention de luminophores verts ou rouges moins onéreux que ceux utilisés actuellement, car le mercure émet lui-même dans le bleu.

Le luminophore vert le plus utilisé actuellement est un aluminate de formule voisine de $Ce_{0,67}Tb_{0,33}MgAl_{11}O_{19}$ ; le terbium est l'élément luminescent et le cérium est un sensibilisateur qui absorbe le rayonnement du mercure et transmet l'énergie absorbée au terbium.

Le luminophore rouge le plus utilisé est l'oxyde d'yttrium dopé à l'europium.

Pour ces deux luminophores, les températures de préparation sont élevées, supérieures à 1500°C pour l'aluminate.

Une réduction du prix de revient des luminophores peut être obtenue soit par une diminution de la teneur en terres rares (en particulier europium, terbium, yttrium), soit par une diminution de la température de préparation.

On a déjà proposé l'utilisation comme substances luminescentes de borates de terres rares. C'est ainsi que la demande de brevet allemand 2.410.134 préconise l'utilisation d'un orthoborate mixte du type $M_3Ln_2(BO_3)_4$ (M étant un métal alcalino-terreux et Ln une terre rare). Ces produits sont obtenus par chauffage des oxydes métalliques et oxyde de bore correspondants, ou de leur précurseurs, à une température de 1150°C.

On a décrit plus récemment des luminophores constitués par des borates mixtes du type $MgLnB_5O_{10}$ qui sont obtenus par chauffage des oxydes correspondants ou de leurs précurseurs à une température de 1000°C pendant 15 heures ; voir B. Saubat et al, Mat. Res. Bull., Vol.16, pages 193-198, 1981. Ces borates mixtes permettent de n'utiliser que de faibles teneurs en terbium par rapport au cérium, en comparaison avec l'aluminate.

Le document FR-A-2.008.204 décrit un matériau luminescent constitué par un borate mixte de métaux alcalino-terreux et d'europium divalent, du type $M_{II}B_8O_{13}$, $M_{II}$ représentant les métaux divalents présents dans ce borate mixte. L'existence de tels borates mixtes du type $M_{II}B_8O_{13}$ ne suggère pas la possibilité d'existence, sous forme de composés définis, de borates mixtes de métaux divalents et trivalents du type $M_{II}M_{III}B_9O_{16}$ ($M_{II}$ étant un métal divalent et $M_{III}$ un métal trivalent).

On a maintenant découvert l'existence d'une nouvelle famille de borates mixtes du type $MLnB_9O_{16}$, qui présentent notamment l'avantage de pouvoir être préparés, par réaction à l'état solide, à température inférieure à 1000°C. Ils possèdent en outre une bonne stabilité lors du fonctionnement des tubes fluorescents qu'ils permettent de réaliser.

Ces nouveaux borates mixtes sont des produits cristallins, qui ont des spectres de diffraction des rayons X caractéristiques, distincts de ceux des divers borates alcalino-terreux, borates de terres rares et borates mixtes connus. Autrement dit, les nouveaux borates mixtes de l'invention sont des composés définis. En diffraction de rayon X, toutes les raies intenses s'indexent dans le système hexagonal. Le tableau suivant donne par exemple les paramètres pour les réseaux-hôtes (du type $M_{II}$ $M_{III}$ $B_9O_{16}$, où $M_{II}$ est le baryum et $M_{III}$ est le lanthane, le gadolinium ou l'yttrium) :

| $M_{III}$ | a (Angström) | c (Angström) |
|---|---|---|
| La | 7,88 | 15,63 |
| Gd | 7,80 | 15,47 |
| Y | 7,78 | 15,40 |

En outre, les borates mixtes de l'Invention possèdent un spectre d'émission qui leur est propre.

Les nouveaux borates mixtes de l'invention présentent en outre la caractéristique d'être riches en oxyde de bore. Il en résulte divers avantages, en particulier une stabilité améliorée, une diminution de la teneur en terres rares et une diminution de la teneur en oxyde alcalino-terreux. La diminution de la teneur en terres rares constitue un avantage économique important, et l'effet de dilution obtenu grâce à une proportion augmentée d'oxyde de bore présente également un avantage en ce qui concerne le spectre d'émission, car on sait que certaines terres rares présentent un phénomène d'auto-extinction à concentration élevée. La diminution de la teneur en oxyde alcalino-terreux est également intéressante, non seulement pour l'amélioration de la stabilité chimique (ils ne subissent aucune dégradation lors de la réalisation des tubes fluorescents), mais aussi en raison du fait que certains borates alcalino-terreux présentent un phénomène d'extinction thermique au voisinage de la température ambiante, de sorte que la possibilité de diminuer la teneur en alcalino-terreux d'un borate mixte apparaît comme un avantage important, au moins dans certains cas.

La présente invention a donc pour objet de nouveaux borates mixtes, caractérisés par le fait qu'ils constituent des produits cristallins monophasés et qu'ils répondent à la formule I :

$$M(II)_{1-x}Eu(II)_xM(III)_pEu(III)_qTb(III)_rB_9O_{16} \quad (I)$$

dans laquelle :

M(II) représente au moins un métal divalent choisi parmi le baryum, le strontium, le plomb et le calcium, étant entendu que, dans un borate mixte donné, le plomb et le calcium, considérés ensemble, ne représentent pas plus de 20% en moles par rapport au nombre total de moles des métaux M(II),

M(III) représente un métal choisi parmi le lanthane, le gadolinium, l'yttrium, le cérium, le lutétium et le bismuth,

x est un nombre supérieur ou égal à zéro et inférieur ou égal à 0,2,

p, q et r représentent chacun un nombre pouvant varier de 0 à 1, étant entendu que, pour un borate donné :

– l'un au moins des nombres x, q et r est différent de zéro ;

– et la somme p + q + r est égale à 1.

Les spécialistes comprendront que dans les borates de formule I, Eu(II), Eu(III), et Tb(III) sont les ions luminescents principaux, et que les métaux M(II) et M(III) jouent selon les cas, le rôle d'activateurs ou de diluants.

Parmi les borates mixtes de formule I, tels que définis ci-dessus, on citera en particulier :

– ceux pour lesquels l'un au moins des nombres q et r est nul ;

– ceux pour lesquels l'un au moins des nombres x et q est nul ;

– ceux pour lesquels x = o, et en particulier ceux pour lesquels x = r = o ; et, parmi ces composés, ceux pour lesquels $M_{II}$ représente le strontium ou des mélanges de baryum ou de strontium avec le calcium et/ou le plomb;

– ceux pour lesquels p varie de 0 à 0,99 ;

– ceux pour lesquels q et r, lorsqu'ils ne sont pas nuls, varient de 0,01 à 1 ; de préférence, r varie dans ce cas de 0,01 à 0,8 ;

– ceux pour lesquels x = q = 0, r est un nombre pouvant varier de 0,1 à 0,9, et M(III) représente le mélange de métaux $Ce_{p1}M_{p2}$, M étant au moins un métal choisi parmi le lanthane, l'yttrium et le gadolinium, p1 étant un nombre pouvant varier de 0,1 à 0,9 et p2 étant un nombre tel que p1 + p2 = p, p étant tel que défini précédemment ; et parmi ces composés, ceux pour lesquels M représente le lanthane et/ou l'yttrium ;

– ceux pour lesquels x = r = 0, q est un nombre pouvant varier de 0,2 à 1, et M(III) représente $Bi_{p3}M_{p4}$,

3

p3 étant un nombre supérieur à 0 et inférieur ou égal à 0,1 et

p4 étant tel que p3 + p4 = p , M et p étant définis comme précédemment ;

– et ceux pour lesquels q = 0,

x est différent de zéro,

r est un nombre pouvant varier de 0 à 1, et

M(III) représente M′, M′ représentant au moins un métal choisi parmi le lanthane, le gadolinium, l'yttrium et le cérium,

p étant défini comme précédemment ;

L'invention a également un procédé de préparation des borates mixtes tels que définis précédemment.

Ce procédé est principalement caractérisé par le fait que l'on mélange l'oxyde de bore et les oxydes des métaux utilisés, ou des précurseurs de ces oxydes, dans les proportions requises, ou encore des borates de ces métaux, et que l'on chauffe le mélange à une température suffisante pour former le composé défini de formule I désiré. Cette température est généralement comprise entre 850 et 1000°C, et le plus souvent entre 900 et 1000°C.

Les précurseurs des oxydes métalliques sont notamment les hydroxydes ou les sels minéraux ou organiques capables de se décomposer par chauffage en oxydes. De tels sels sont par exemple les carbonates, les oxalates, les acétates, les nitrates, etc.... Bien entendu, on peut utiliser également comme produits de départ les borates des métaux requis. En outre, on peut également utiliser l'acide borique comme source d'oxyde de bore.

Dans le cas où les borates mixtes contiennent les métaux Eu(II) ou Tb(III), il convient d'opérer en atmosphère légèrement réductrice, par exemple en présence d'hydrogène dilué avec de l'argon ou de l'azote.

Lorsque les borates mixtes que l'on veut préparer contiennent Eu(III), il convient d'opérer en atmosphère oxydante, par exemple en atmosphère d'oxygène ou bien à l'air.

En réglant l'atmosphère réductrice et/ou oxydante, il est possible d'obtenir des borates mixtes de formule I contenant à la fois Eu(II) et Eu(III) et/ou Tb(III).

L'invention a également pour objet des compositions luminescentes, caractérisées par le fait qu'elles renferment au moins un borate mixte tel que défini ci-dessus. Ces compositions peuvent contenir par exemple, outre le borate mixte, un excès de $B_2O_3$ et/ou d'oxyde du métal M(II). Cet excès est par exemple de 20% en moles pour $B_2O_3$, et/ou de 50% pour l'oxyde M(II)O, par rapport à la composition du produit de formule I.

Ces excès éventuels de $B_2O_3$ et/ou d'oxyde M(II)O peuvent être présents dans le mélange de départ utilisé pour préparer le produit de formule I.

Les compositions de l'invention peuvent être utilisées dans toutes les applications nécessitant des compositions luminescentes, éventuellement celles pouvant être excitées par l'ultraviolet. Elles sont utilisables dans les lampes et tubes fluorescents, et en particulier dans les lampes à décharge à vapeur de mercure. On peut également les utiliser dans les panneaux à plasma, et aussi comme agents de codage optique, par exemple pour papiers spéciaux.

Elles peuvent aussi être incorporées, de façon connue, dans les céramiques pour prothèses dentaires.

Enfin, les compositions à base de terbium peuvent être utilisées comme luminophore vert dans les appareils de reproduction xérographique.

Les compositions de l'invention sont utilisées et appliquées selon les méthodes usuelles.

Les exemples suivants illustrent l'invention sans toutefois la limiter.


EXEMPLE 1

On a préparé le composé répondant à la formule $BaCe_{0,6} Tb_{0,4} B_9O_{16}$ à partir du mélange suivant :

| Produits de départ | Quantités |
|---|---|
| $Ba(NO_3)_2$ | 4,181g |
| $CeO_2$ | 1,652g |
| $Tb_4O_7$ | 1,196g |
| $B_2O_3$ | 5,013g |

Ces produits sont mélangés intimement par broyage ; le mélange est introduit dans un creuset en alumine et porté dans un four à 950°C sous courant d'hydrogène dilué dans un gaz inerte (azote ou argon) pendant 15heures.

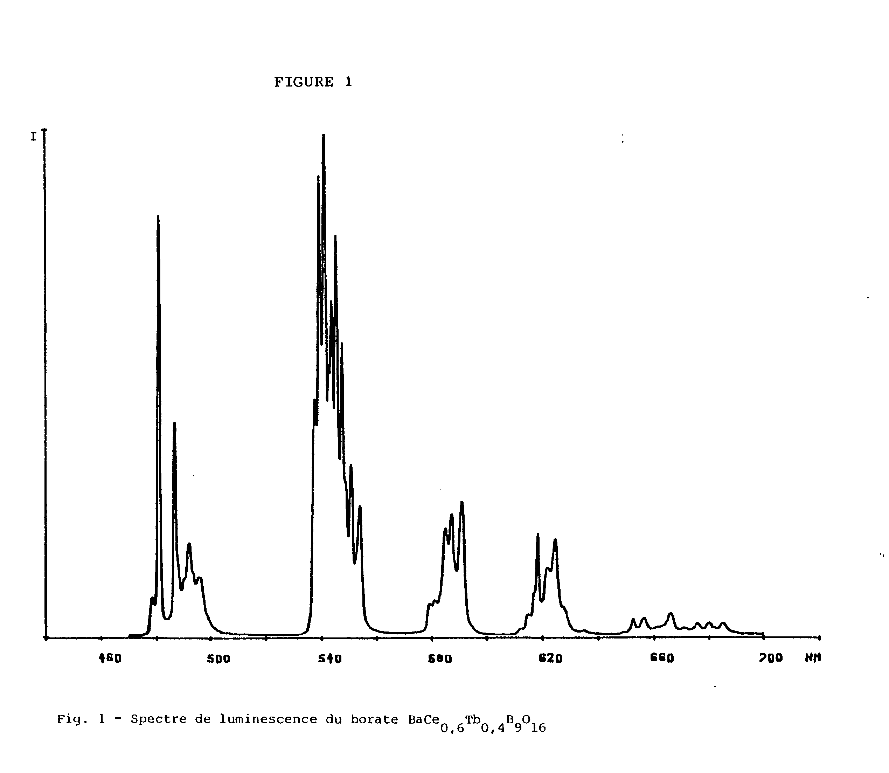

Le produit obtenu se présente sous la forme d'une poudre blanche, insensible à l'action de l'eau. Irradié par un rayonnement de longueur d'onde comprise entre 250 et 300nm, il présente une luminescence intense de couleur vert-jaune. Le spectre d'émission est représenté à la figure 1.

## EXEMPLE 2

On a préparé le composé répondant à la formule $BaCe_{0,2} Gd_{0,5} Tb_{0,3} B_9O_{16}$ à partir du mélange suivant :

| Produits de départ | Quantités |
|---|---|
| $Ba(NO_3)_2$ | 4,181g |
| $CeO_2$ | 0,551g |
| $Gd_2O_3$ | 1,450g |
| $Tb_4O_7$ | 0,897g |
| $B_2O_3$ | 5,013g |

Ces produits de départ sont mélanges et traités de la même façon qu'à l'exemple 1.

Excité par un rayonnement de longueur d'onde comprise entre 250 et 300nm, le produit obtenu présente une luminescence intense, similaire à celle du produit de l'exemple 1.

## EXEMPLE 3

On a préparé le composé répondant à la formule $BaEu_{0,3} Gd_{0,7} B_9O_{16}$ à partir du mélange suivant :

| Produits de départ | Quantités |
|---|---|
| $Ba(NO_3)_2$ | 4,181g |
| $Eu_2O_3$ | 0,845g |
| $Gd_2O_3$ | 2,021g |
| $B_2O_3$ | 5,013g |

Ces produits sont mélangés intimement par broyage, le mélange est introduit dans un creuset en alumine et porté dans un four à 950°C sous courant d'oxygène pendant 15heures.

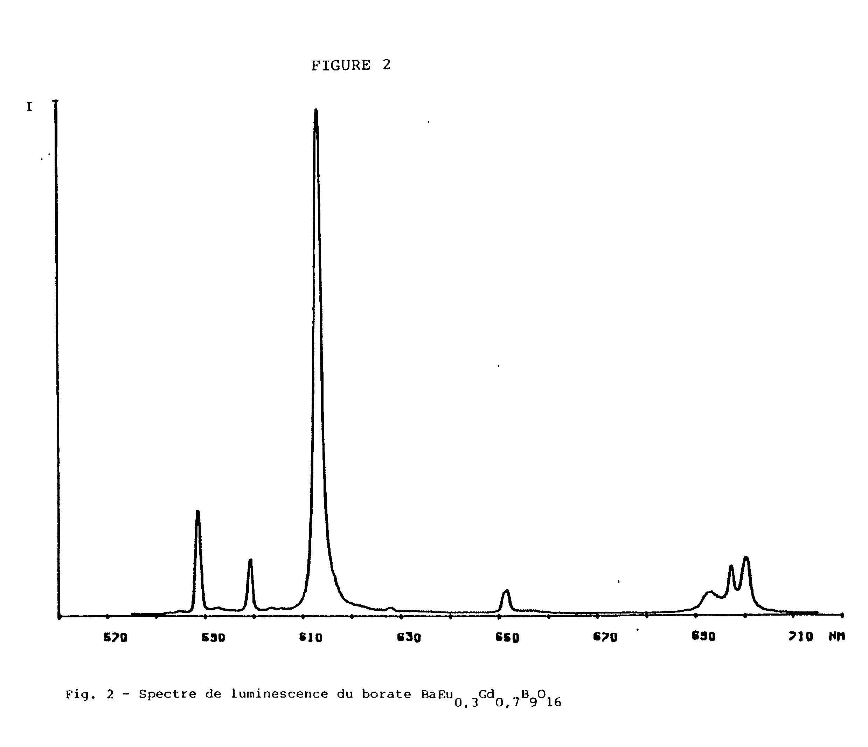

Le produit obtenu se présente sous la forme d'une poudre blanche. Irradié par un rayonnement ultraviolet à 253,7nm, il présente une intense luminescence rouge dont le spectre est donné à la figure 2.

## EXEMPLE 4

On a préparé le composé répondant à la formule $Ba_{0,99} Eu_{0,01} GdB_9O_{16}$ à partir du mélange suivant :

| Produits de départ | Quantités |
|---|---|
| $Ba(NO_3)_2$ | 4,140g |
| $Eu_2O_3$ | 0,028g |
| $Gd_2O_3$ | 2,900g |
| $B_2O_3$ | 5,013g |

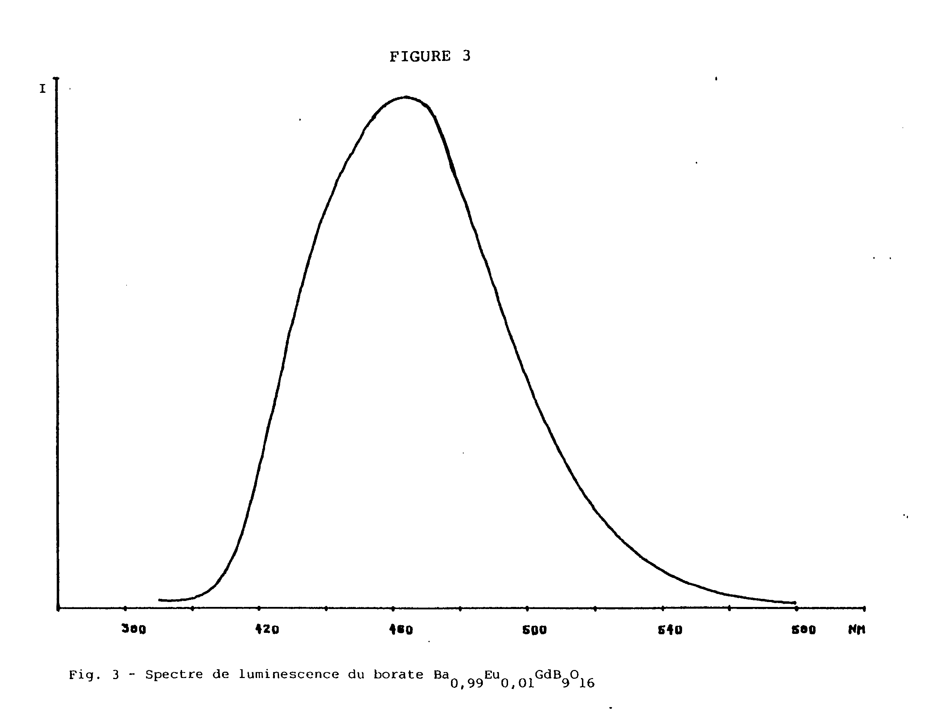

Ces produits de départ sont mélangés et traités de la même façon qu'à l'exemple 1, mais on utilise un creuset en or. Soumis à l'action d'un rayonnement ultraviolet, le produit obtenu présente une luminescence bleue intense (Fig.3)

EXEMPLE 5

On a préparé le composé de formule $Ba\,Eu_{0,2}\,Y_{0,8}\,B_9O_{16}$, à partir du mélange suivant :

| Produits de départ | Quantités |
|---|---|
| $Ba(NO_3)_2$ | 4,181g |
| $Eu_2O_3$ | 0,563g |
| $Y_2O_3$ | 1,445g |
| $B_2O_3$ | 5,013g |

Ces produits sont mélangés et traités de la même façon qu'à l'exemple 3.
Soumis à l'action d'un rayonnement ultraviolet, le produit obtenu présente une luminescence orange intense.

EXEMPLE 6

On a préparé le composé de formule
$$Ba\,Eu_{0,3}\,Gd_{0,695}\,Bi_{0,005}\,B_9O_{16}$$
au départ des produits suivants :

| Produits | Quantités |
|---|---|
| $Ba(NO_3)_2$ | 4,181g |
| $Eu_2O_3$ | 0,845g |
| $Gd_2O_3$ | 2,015g |
| $Bi_2O_3$ | 0,039g |
| $B_2O_3$ | 5,013g |

Ces produits sont mélangés et traités comme à l'exemple 3.
Soumis à iraction d'un rayonnement ultraviolet, le produit obtenu présente une luminescence rouge intense.

EXEMPLE 7

On a préparé le composé de formule $Ba_{0,99}\,Pb_{0,01}\,La_{0,7}\,Eu_{0,3}\,B_9O_{16}$, au départ des produits suivants :

6

| Produits | Quantités |
|---|---|
| $Ba(NO_3)_2$ | 4,140g |
| $Pb\ CO_3$ | 0,043g |
| $La_2O_3$ | 1,825g |
| $Eu_2O_3$ | 0,845g |
| $B_2O_3$ | 5,013g |

On opère comme à l'exemple 3.

Soumis à l'action d'un rayonnement ultraviolet, le produit obtenu présente une luminescence rouge intense.

## EXEMPLE 8

On a préparé le composé de formule $Sr_{0,95}\ Eu_{0,05}\ Gd\ B_9\ O_{16}$ au départ des produits suivants :

| Produits | Quantités |
|---|---|
| $Sr\ CO_3$ | 2,244g |
| $Eu_2O_3$ | 0,141g |
| $Gd_2O_3$ | 2,900g |
| $B_2O_3$ | 5,013g |

On opère comme à l'exemple 4.

Soumis à l'action d'un rayonnement ultraviolet, le produit obtenu présente une luminescence bleue intense (max. à 475nm).

## EXEMPLE 9

On a préparé le composé de formule $Sr_{0,85}\ Ca_{0,10}\ Eu_{0,05}\ Gd\ B_9\ O_{16}$ au départ des produits suivants :

| Produits | Quantités |
|---|---|
| $Sr\ CO_3$ | 2,008g |
| $Ca\ CO_3$ | 0,160g |
| $Eu_2O_3$ | 0,141g |
| $Gd_2O_3$ | 2,900g |
| $B_2O_3$ | 5,013g |

On opère comme à l'exemple 4.

Luminescence : Bleu intense.

## EXEMPLE 10 à 25

De façon analogue, on a préparé les composés ou compositions suivants :

7

| EXEMPLE | COMPOSE | LUMINESCENCE |
|---|---|---|
| 10 | $Ba\ Ce_{0,2}\ La_{0,5}\ Tb_{0,3}\ B_9\ O_{16}$ | vert-jaune |
| 11 | $Ba\ Ce_{0,2}\ Y_{0,5}\ Tb_{0,3}\ B_9\ O_{16}$ | vert-jaune |
| 12 | $Sr\ Ce_{0,2}\ Gd_{0,5}\ Tb_{0,3}\ B_9 O_{16}$ | vert-jaune |
| 13 | $Ba\ Ce_{0,2}\ Gd_{0,5}\ Tb_{0,3}\ B_9 O_{16},\ 0,5\ B_2 O_3$ | vert-jaune |
| 14 | $Ba\ Ce_{0,2}\ Gd_{0,5}\ Tb_{0,3}\ B_9 O_{16},\ 0,5\ B_2 O_4$ | vert-jaune |
| 15 | $Ba\ Ce_{0,2}\ Lu_{0,5}\ Tb_{0,3}\ B_9 O_{16}$ | vert-jaune |
| 16 | $Ba\ Eu_{0,3}\ La_{0,7}\ B_9\ O_{16}$ | rouge |
| 17 | $Ba\ Eu_{0,3}\ Gd_{0,7}\ B_9\ O_{16}$ | rouge |
| 18 | $Ba\ Eu_{0,3}\ Gd_{0,7}\ B_9\ O_{16},\ 0,5\ B_2 O_3$ | rouge |
| 19 | $Ba\ Eu_{0,3}\ Gd_{0,7}\ B_9\ O_{16},\ 0,5\ BaB_2 O_4$ | rouge |
| 20 | $Ba\ Ce_{0,1}\ Tb_{0,9}\ B_9\ O_{16}$ | vert-jaune |
| 21 | $Ba\ Ce_{0,9}\ Tb_{0,1}\ B_9\ O_{16}$ | vert-jaune |
| 22 | $Ba\ Ce_{0,8}\ La_{0,1}\ Tb_{0,1}\ B_9 O_{16}$ | vert-jaune |
| 23 | $Ba\ Eu_{0,2}\ Gd_{0,8}\ B_9\ O_{16}$ | rouge |
| 24 | $Ba\ Eu\ B_9\ O_{16}$ | rouge |
| 25 | $Ba\ Eu_{0,2}\ Bi_{0,1}\ Y_{0,7}\ B_9\ O_{16}$ | orange |

**Revendications**

1. Borates mixtes, caractérisés par le fait qu'ils constituent des produits cristallins monophasés et qu'ils répondent à la formule I :

$$M(II)_{1-x}Eu(II)_x M(III)_p Eu(III)_q Tb(III)_r B_9 O_{16} \quad (I)$$

dans laquelle :

M(II) représente au moins un métal divalent choisi parmi le baryum, le strontium, le plomb et le calcium, étant entendu que, dans un borate mixte donné, le plomb et le calcium, considérés ensemble, ne représentent pas plus de 20% en moles par rapport au nombre total de moles des métaux M(II),

M(III) représente un métal choisi parmi le lanthane, le gadolinium, l'yttrium, le cérium, le lutétium et le bismuth,

x est un nombre supérieur ou égal à zéro et inférieur ou égal à 0,2,

p, q et r représentent chacun un nombre pouvant varier de 0 à 1, étant entendu que, pour un borate donné :

– l'un au moins des nombres x, q et r est différent de zéro ;

– et la somme p + q + r est égale à 1.

2. Borates mixtes selon la revendication 1, caractérisés par le fait que p varie de 0 à 0,99.

3. Borates mixtes selon l'une quelconque des revendications précédentes, caractérisés par le fait que q et r, lorsqu'ils ne sont pas nuls, varient de 0,01 à 1.

4. Borates mixtes selon la revendication 1 ou 2, caractérisés par le fait que l'un au moins des nombres q et r est nul.

5. Borates mixtes selon l'une quelconque des revendications précédentes, caractérisés par le fait que l'un au moins des nombres x et q est nul.

6. Borates mixtes selon l'une quelconque des revendications précédentes, caractérisés par le fait que x = o.

7. Borates mixtes selon l'une quelconque des revendications précédentes, caractérisés par le fait que

x = q = 0,

r est un nombre pouvant varier de 0,1 à 0,9, et

M(III) représente le mélange de métaux $Ce_{p1} M_{p2}$, M étant au moins un métal choisi parmi le lanthane, l'yttrium et le gadolinium,

p1 étant un nombre pouvant varier de 0,1 à 0,9 et p2 étant un nombre tel que p1 + p2 = p, p étant tel que défini précédemment.

8. Borates mixtes selon la revendication 7, caractérisés par le fait que M représente le lanthane et/ou l'yttrium.

9. Borates mixtes selon l'une quelconque des revendications 1 à 6, caractériséspar le fait que

x = r = 0,

q est un nombre pouvant varier de 0,2 à 1, et

M(III) représente $Bi_{p3} M_{p4}$,

p3 étant un nombre supérieur à 0 et inférieur ou égal à 0,1 et

p4 étant tel que p3 + p4 = p, M étant au moins un métal choisi parmi le lanthane, l'yttrium et le gadolinium, et p étant défini comme précédemment.

10. Borates mixtes selon l'une quelconque des revendications 1 à 5, caractérisés par le fait que

q = 0,

x est différent de zéro,

r est un nombre pouvant varier de 0 à 1, et

M(III) représente M', M' représentant au moins un métal choisi parmi le lanthane, le gadolinium, l'yttrium et le cérium.

11. Borates mixtes selon la revendication 6, caractérisé par le fait que $M_{II}$ représente Sr ou des mélanges de baryum ou de strontium avec le calcium et/ou le plomb.

12. Procédé de préparation de borates mixtes tels que définis dans l'une quelconque des revendications précédentes, caractérisé par le fait que l'on mélange l'oxyde de bore et les oxydes des métaux utilisés, ou des précurseurs de ces oxydes, dans les proportions requises, ou encore des borates de ces métaux, et que l'on chauffe le mélange à température de 850 à 1000°C pour obtenir le composé défini de formule I désiré.

13. Procédé selon la revendication 12, caractérisé par le fait que les précurseurs des oxydes métalliques sont les hydroxydes ou les sels minéraux ou organiques capables de se décomposer par chauffage en oxyde, et que le précurseur de l'oxyde de bore est l'acide borique.

14. Composition luminescente, caractérisée par le fait qu'elle renferme au moins un borate mixte tel que défini dans l'une quelconque des revendications 1 à 11.


**Patentansprüche**

1. Gemischte Borate, dadurch gekennzeichnet, daß sie kristalline, einphasigne Produkte bilden und daß sie der Formel I entsprechen:

$$M(II)_{1-x}Eu(II)_xEU(III)_qTb(III)_rB_9O_{16} \quad (I),$$

in der:

M(II) mindestens ein zweiwertiges Metall bedeutet, das aus Barium, Strontium, Blei und Calcium ausgewählt ist, mit der Maßgabe, daß in einem vorgegebenen gemischten Borat das Blei und das Calcium, insgesamt betrachtet, nicht mehr als 20 Mol-%, bezogen auf die Gesamtanzahl der Mole an Metallen M(II), ausmachen,

M(III) ein Metall bedeutet, das aus Lanthan, Gadolinium, Yttrium, Cer, Lutetium und Wismut ausgewählt ist,

x eine Zahl größer oder gleich Null und kleiner oder gleich 0,2 ist,

p, q und r jeweils eine Zahl ist, die zwischen 0 und 1 liegen kann, mit der Maßgabe, daß für ein vorgebenes Borat:

– wenigsten eine der Zahlen x, q und r verschieden von Null ist;

– und die Summe von p + q + r gleich 1 ist.

2. Gemischte Borate nach Anspruch 1, dadurch gekennzeichent, daß p zwischen 0 und 0,99 leigt.

3. Gemischte Borate nach einem der vorhergehenden Ansprüche, dadurch gekennzeichnet, daß q und r, wenn sie nicht Null sind, zwischen 0,01 und 1 liegen.

4. Gemischte Borate nach Anspruch 1 oder 2, dadurch gekennzeichnet, daß mindestens eine der Zahlen q und r Null ist.

5. Gemischte Borate nach einem der vorhergehenden Ansprüche, dadurch gekennzeichnet, daß mindestens eine der Zahlen x und q Null ist.

6. Gemischte Borate nach einem der vorhergehenden Ansprüche, dadurch gekennzeichnet, daß x = 0 ist.

7. Gemischte Borate nach einem der vorhergehenden Ansprüche, dadurch gekennzeichnet, daß

x = q = 0 ist,

r eine Zahl ist, die zwischen 0,1 und 0,9 liegen kann, und M(III) ein Gemisch der Metalle $Ce_{p1}M_{p2}$ ist, wobei M mindestens ein Metall ist, das aus Lanthan, Yttrium und Gadolinium ausgewählt ist,

p1 eine Zahl ist, die zwischen 0,1 und 0,9 liegen kann, und p2 ein solcher Wert ist, daß p1 + p2 = p sind, wobei p wie vorstehend definiert ist.

8. Gemischte Borate nach Anspruch 7, dadurch gekennzeichnet, daß M Lanthan und/oder Yttrium bedeutet.

9. Gemischte Borate nach einem der Ansprüche 1 bis 6, dadurch gekennzeichnet, daß

x = r = 0 ist,

q eine Zahl ist, die zwischen 0,2 und 1 liegen kann, und

M(III) $Bi_{p3}M_{p4}$ bedeutet,

p3 eine Zahl größer als 0 und kleiner oder gleich 0,1 ist und

p4 ein solcher Wert ist, daß p3 + p4 = p ist, wobei M mindestens ein Metall ist, das aus Lanthan, Yttrium und Gadolinium ausgewählt ist und p wie vorstehend definiert ist.

10. Gemischte Borate nach einem der Ansprüche 1 bis 5, dadurch gekennzeichnet, daß

q = 0 ist,

x verschieden von Null ist,

r eine Zahl ist, die zwischen 0 und 1 liegen kann, und M(III) m' ist, wobei M' mindestens ein Metall ist, das aus Lanthan, Gadolinium, Yttrium und Cer ausgewählt ist.

11. Gemischte Borate nach Anspruch 6, dadurch gekennzeichnet, daß M/II) Sr oder Gemische von Barium oder Strontium mit Calcium und/oder Blei bedeutet.

12. Verfahren zur Herstellung der gemischten Borate nach einem der vorhergehenden Ansprüche, dadurch gekennzeichnet, daß man Boroxid und die Oxide der verwendeten Metalle oder die Vorläufer dieser Oxide oder auch die Borate dieser Metalle in den erforderlichen Anteilen mischt, und daß man das Gemisch auf eine Temperatur von 850 bis 1000°C erhitzt, um die in Formel I definierte gewünschte Zusammensetzung zu erhalten.

13. Verfahren nach Anspruch 12, dadurch gekennzeichnet, daß die Vorläufer der Metalloxide die Hydroxide oder Mineral- oder organische Salze sind, die befähigt sind, sich beim Erhitzen zu Oxiden zu zersetzen, und daß der Vorläufer des Boroxids Borsäure ist.

14. Lumineszierende Zusammensetzung, dadurch gekennzeichnet, daß sie mindestens ein gemischtes Borat, wie in einem der Ansprüche 1 bi 11 definiert, enthält.


**Claims**

1. Mixed borates characterised in that they from single-phase crystalline products and correspond to the formula I:

$$M(II)_{1-x}Eu(II)_xM(III)_pEu(III)_qTb(III)_rB_9O_{16} \quad (I)$$

in which:

M(II) denotes at least one divalent metal chosen from barium, strontium, lead and calcium, it being understood that, in a given mixed borate, lead and calcium, considered together, do not represent more than 20 mol% relative to the total number of moles of the metals M(II),

M(III) denotes a metal chosen from lanthanum, gadolinium, yttrium, cerium, lutetium and bismuth,

x is a number greater than or equal to zero and smaller than or equal to 0.2,

each of p, q and r denotes a number which may vary from 0 to 1, it being understood that, for a given borate:

– at least one of the numbers x, q and r is other than zero, and

– the sum p + q + r is equal to 1.

2. Mixed borates according to Claim 1, characterised in that p varies from 0 to 0.99.

3. Mixed borates according to either of the preceding claims, characterised in that q and r vary from 0.01 to 1 when they are not zero.

4. Mixed borates according to Claim 1 or 2, characterised in that at least one of the numbers q and r is zero.

5. Mixed borates according to any one of the preceding claims, characterised in that at least one of the numbers x and q is zero.

6. Mixed borates according to any one of the preceding claims, characterised in that x = 0.

7. Mixed borates according to any one of the preceding claims, characterised in that

x = q = 0,

r is a number which may vary from 0.1 to 0.9, and

M(III) denotes the mixture of metals $Ce_{p1}M_{p2}$, M being at least one metal chosen from lanthanum, yttrium and gadolinium,

p1 being a number which may vary from 0.1 to 0.9 and p2 being a number such that p1 + p2 = p, p being as defined above.

8. Mixed borates according to Claim 7, characterised in that M denotes lanthanum and/or yttrium.

9. Mixed borates according to any one of Claims 1 to 6, characterised in that

x = r = 0,

q is a number which may vary from 0.2 to 1, and

M(III) denotes $Bi_{p3}M_{p4}$,

p3 being a number greater than 0 and smaller than or equal to 0.1 and

p4 being such that p3 + p4 = p, M being at least one metal chosen from lanthanum, yttrium and gadolinium, and p being defined as above.

10. Mixed borates according to any one of Claims 1 to 5, characterised in that

q = 0,

x is other than 0,

r is a number which may vary from 0 to 1, and

M(III) denotes M', M' denoting at least one metal chosen from lanthanum, gadolinium, yttrium and cerium.

11. Mixed borates according to Claim 6, characterised in that $M_{II}$ denotes Sr or mixtures of barium or strontium with calcium and/or lead.

12. Process for the preparation of mixed borates as defined in any one of the preceding claims, characterised in that boron oxide and oxides of the metals employed, or precursors of these oxides, in the required proportions, or borates of these metals, are mixed and that the mixture is heated to a temperature of 850 to 1000°C to obtain the desired compound defined by formula I.

13. Process according to Claim 12, characterised in that the precursors of the metal oxides are the hydroxides or the inorganic or organic salts capable of decomposing into oxide when heated and that the precursor of boron oxide is boric acid.

14. Luminescent composition characterised in that it contains at least one mixed borate as defined in any one of Claims 1 to 11.

FIGURE 1

Fig. 1 - Spectre de luminescence du borate $BaCe_{0,6}Tb_{0,4}B_9O_{16}$

FIGURE 2

Fig. 2 – Spectre de luminescence du borate $BaEu_{0,3}Gd_{0,7}B_9O_{16}$

FIGURE 3

Fig. 3 - Spectre de luminescence du borate $Ba_{0,99}Eu_{0,01}GdB_9O_{16}$

EP 0 266 384 B1